# FASCICULE DE BREVET EUROPEEN

(11) **EP 2 712 773 B1**
(45) Date de publication et mention de la délivrance du brevet: **23.01.2019**
(21) Numéro de dépôt: 13186013.2
(22) Date de dépôt: 25.09.2013
(51) Int. Cl.: B60S 1/34

(54) **Dispositif de connexion pour système d'essuyage à deux bras d'actionnement et système d'essuyage comprenant un tel dispositif**
Verbindungssystem für Scheibenwischsystem mit zwei Wischerarmen, und eine solche Vorrichtung umfassendes Scheibenwischsystem
Connection device for a wiper system with two actuator arms and wiper system including such a device

(30) Priorité: 27.09.2012 FR 1259083
(43) Date de publication de la demande: 02.04.2014
(73) Titulaire: Valeo Systèmes d'Essuyage, 78322 Le Mesnil Saint Denis (FR)
(72) Inventeur: Grasso, Giuseppe, 63340 Le Breuil sur Couze (FR); Rousseau, Jean-François, 63340 CHARBONNIER LES MINES (FR); Trebouet, Marcel, 78450 CHAVENAY (FR)
(74) Mandataire: Callu-Danseux, Violaine

(56) Documents cités:
- EP-A1- 2 377 732
- DE-A1-102005 035 545
- FR-A1- 2 913 652

## Description

Le secteur technique de la présente invention est celui des systèmes d'essuyage d'une vitre d'un véhicule, notamment automobile. Le système conforme à l'invention est plus particulièrement destiné à être installé sur un pare-brise du véhicule.

Les automobiles sont couramment équipées de systèmes d'essuyage du pare-brise, servant à assurer au conducteur une vision dégagée de son environnement, en particulier en cas d'intempéries. Un tel système comprend généralement deux balais d'essuyage qui raclent la surface extérieure du pare-brise de manière à évacuer en dehors du champ de vision du conducteur l'eau et/ou la neige présente sur cette surface.

Il est également connu des systèmes d'essuyage à un seul balai, en particulier pour les véhicules dont le pare-brise reste de taille limitée. Pour obtenir un balayage satisfaisant, il est connu de munir de tels systèmes de deux bras d'entrainement et d'un dispositif de connexion entre les bras et le balai présentant les points d'articulations nécessaires. Cela étant, de tels dispositifs prévoient un déport de l'accrochage du balai sur le côté du dispositif de connexion et ils sont lourds et encombrants.

Il est par ailleurs connu d'équiper les véhicules d'un système de lavage agencé pour projeter un liquide sur le pare-brise, de manière à faciliter la dissolution des salissures, et ainsi augmenter la qualité du nettoyage de ce pare-brise sous l'action du système d'essuyage. Selon une version classique, ledit système de lavage comprend un ou des gicleurs installés sur un capot du véhicule, l'un de ces gicleurs étant dédié à l'arrosage d'une zone du pare-brise située en face du conducteur du véhicule, alors que l'autre gicleur est affecté à l'arrosage d'une zone du pare-brise située en face du passager avant du véhicule.

Dans une version améliorée, il a été proposé un balai d'essuyage qui comporte son propre élément de projection de liquide de lavage. Autrement dit, la projection du liquide de lavage a lieu depuis le balai d'essuyage lui-même, à partir de buses d'aspersion réparties le long dudit balai.

De tels dispositifs d'aspersion sont difficilement compatibles avec les dispositifs connus de connexion pour système d'essuyage à deux bras d'entrainement.

Le document EP 2 377 732 A1 montre un dispositif de connexion pour système d'essuyage tel que décrit dans le préambule de la première revendication.

L'invention vise à pallier les inconvénients précités et propose à cet effet un dispositif de connexion pour système d'essuyage, notamment de pare-brise de véhicule automobile, à deux bras d'entrainement d'un balai d'essuyage dudit système, ledit dispositif comprenant une première articulation avec l'un desdits bras configurée pour autoriser le pivotement d'un premier desdits bras autour d'un premier axe de pivotement et une deuxième articulation avec l'autre desdits bras configurée pour autoriser le pivotement du second desdits bras autour d'un second axe de pivotement, ledit premier axe et ledit second axe de pivotement sont parallèles entre eux selon une direction, dite d'articulation, ledit dispositif étant configuré pour recevoir le balai d'essuyage entre la première et la seconde articulation, selon une direction passant par lesdites articulations, ledit dispositif comprend un corps dans lequel sont formées lesdites articulations caractérisé en ce que ledit corps comprend deux flasques, l'un dit supérieur et l'autre dit inférieur et l'une au moins desdites articulations est définie par deux orifices d'articulation respectivement formés dans chacun desdits flasques, lesdites orifices étant situés en vis-à-vis selon ladite direction d'articulation.

En disposant de la sorte le balai entre les points d'articulation des bras sur le dispositif de connexion, on limite son encombrement. On facilite également l'implantation d'un dispositif d'aspersion lié au balai.

Selon différents modes de réalisation qui pourront être pris ensemble ou séparément :
- ledit corps comprend une tête d'accrochage d'un connecteur du balai,
- chacune desdites articulations est formée par deux dits orifices d'articulation et ladite tête est située entre lesdits orifices d'articulation selon une direction passant par lesdites articulations,
- ladite tête d'accrochage est issue dudit flasque supérieur,
- ladite tête d'accrochage s'étend jusqu'audit flasque inférieur,
- ladite tête d'accrochage est configurée pour permettre une rotation du balai autour d'un axe transversale à un plan suivant une direction d'extension du balai et ladite direction d'articulation,
- ladite tête d'accrochage est munie de flancs présentant des orifices de pivotement, situés en vis-à-vis et permettant la rotation du balai autour dudit axe transversale.

L'invention concerne également un système d'essuyage comprenant un dispositif de connexion tel que décrit plus haut ainsi que, par exemple, lesdits bras d'entrainement, ledit balai d'essuyage, un dispositif d'aspersion depuis ledit balai et/ou un dispositif d'actionnement de l'un au moins desdits bras.

Avantageusement, lesdits bras sont destinés à donner au balai d'essuyage une trajectoire comprenant une composante de pivotement autour d'un axe d'entrainement du premier desdits bras, destiné à entrainer le balai, et une composante de décalage angulaire par rapport à ladite composante de pivotement par l'intermédiaire de l'autre desdits bras.

D'autres caractéristiques, détails et avantages de l'invention ressortiront plus clairement à la lecture de la description donnée ci-après à titre indicatif en relation avec des dessins dans lesquels :
- la figure 1 illustre de façon schématique en vue de face un exemple de système d'essuyage conforme à l'invention, dans une première position,
- la figure 2 reprend la figure 1, ledit système d'essuyage étant dans une seconde position,
- la figure 3 est une première vue en perspective du système d'essuyage de la figure 1,
- la figure 4 est une autre vue en perspective du système d'essuyage de la figure 1 permettant de voir un dispositif de connexion dudit système selon un premier angle de vue,
- la figure 5 est une autre vue en perspective du système d'essuyage de la figure 1, permettant de voir ledit dispositif de connexion selon un second angle de vue, un balai dudit système d'essuyage étant illustré de façon éclaté du reste dudit système,
- la figure 6 reprend la figure 5, ledit balai d'essuyage étant cette fois assemblé au reste dudit système d'essuyage,
- la figure 7 est une autre vue en perspective du système d'essuyage de la figure 1, permettant de voir ledit dispositif de connexion et des extrémités de bras d'entrainement du balai d'essuyage dudit système, selon un troisième angle de vue,
- la figure 8 une autre vue en perspective du système d'essuyage de la figure 1, permettant de voir les autres extrémités des bras d'entrainement, selon un quatrième angle de vue
- la figure 9 est une autre vue en perspective du système d'essuyage de la figure 1, selon un cinquième angle de vue,
- la figure 10 est une autre vue en perspective du système d'essuyage de la figure 1, détaillant un dispositif d'actionnement dudit système, selon un angle de vue sensiblement identique à celui de la figure 8,
- la figure 11 montre en vue de face un exemple de ressort dudit dispositif d'actionnement.

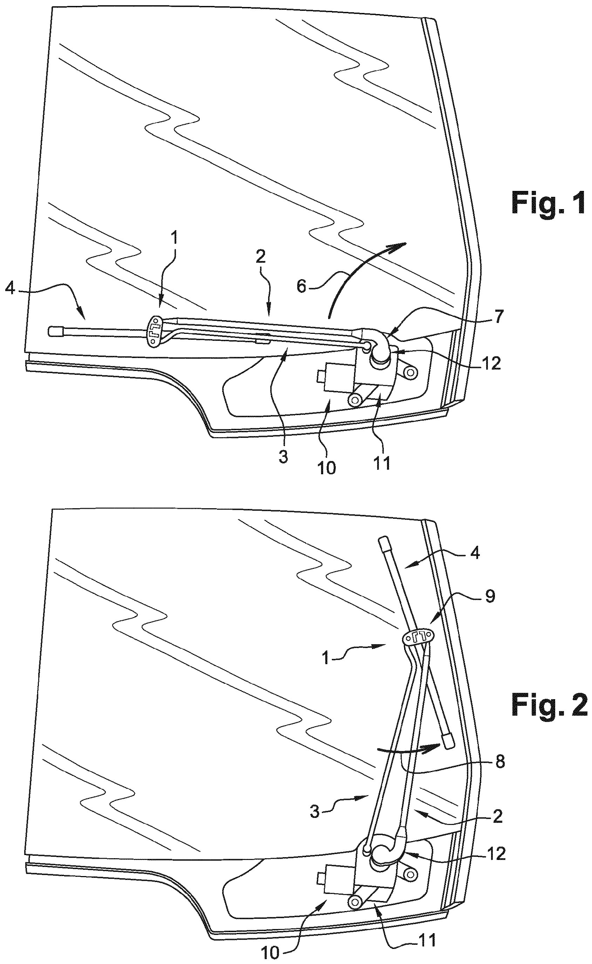

Comme illustré aux figures 1 et 2, l'invention concerne un dispositif de connexion 1 pour système d'essuyage à deux bras d'entrainement 2, 3 d'un balai d'essuyage 4 dudit système. L'invention concerne également un tel système d'essuyage. Elle trouvera ses applications, notamment, en tant que système d'essuyage de vitre de véhicule automobile, en particulier pare-brise.

Le balai d'essuyage 4, lorsqu'il est monté sur le véhicule, est en appui contre une face extérieure du pare-brise du véhicule. Le pare-brise mentionné ici est un exemple d'une vitre essuyée par le système d'essuyage selon l'invention, mais il va de soi que cette vitre peut être une lunette arrière du véhicule et d'une manière générale tout vitrage d'un véhicule automobile dont la surface est apte à être essuyée par un système d'essuyage.

Lesdits bras 2, 3 sont destinés ici à donner au balai d'essuyage 4 une trajectoire comprenant une composante de pivotement, illustré par la flèche repérée 6, autour d'un axe d'entrainement 7 d'un premier 2 desdits bras, destiné à entrainer le balai 4, et une composante de décalage angulaire, illustrée par la flèche repérée 8, par rapport à ladite composante de pivotement par l'intermédiaire de l'autre 3 desdits bras, dit bras de guidage. Autrement dit, le bras d'entrainement fait pivoter ledit balai d'essuyage 4 autour dudit axe d'entrainement 7 pour le faire passer, de façon alternative, d'une position de repos illustrée à la figure 1, à une position angulairement décalée, illustrée à la figure 2, de ladite position de repos, ceci de façon à balayer la surface désirée du pare-brise, tandis que ledit bras de guidage 3 fait tourner ledit balai d'essuyage 4 autour d'un point 9 mobile avec ledit balai d'essuyage 4, notamment afin d'adapter le mouvement du balai d'essuyage 4 à la forme du pare-brise.

Lesdits bras 2, 3 sont configurés, par exemple, pour s'étendre parallèlement l'un à l'autre dans ladite position de repos dudit système tandis qu'ils s'écartent légèrement l'un de l'autre lors de la rotation du bras d'entrainement 2, sous l'action dudit bras de guidage 3.

Ledit système est avantageusement destiné à être positionné sur le véhicule de façon à ce que ledit balai d'essuyage 3, au repos, soit en position sensiblement horizontale, par exemple, le long d'un bord inférieur du pare-brise.

Ledit système d'essuyage pourra en outre comporter un ensemble d'actionnement comprenant, par exemple, un moteur électrique 10, avantageusement électronisé, chargé de transformer l'énergie électrique en un mouvement de rotation, et des moyens de transmission 11 chargés de transmettre le mouvement de rotation délivré par le moteur à un dispositif d'actionnement 12, ici desdits bras 2, 3, développé plus loin.

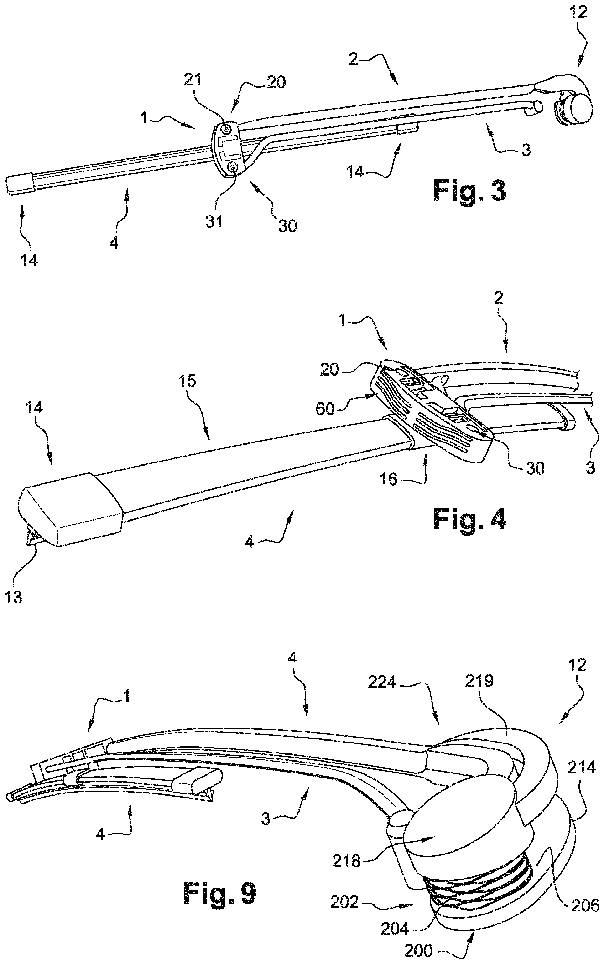

Comme illustré aux figures 3 et 4, le balais d'essuyage 4 est, par exemple, de type à lame plate (flat blade, en anglais), c'est-à-dire comprenant au moins une raclette ou lame d'essuyage 13 destinée à être plaquée contre le pare-brise et une ou plusieurs vertèbres de rigidification, non-visibles, reliées à la raclette 13 et qui s'étendent le long de celle-ci.

Ledit balai d'essuyage 4 pourra en outre comprendre des embouts d'assemblage 14 permettant de solidariser la raclette 10 et la ou les vertèbres au niveau de leurs extrémités longitudinales ainsi que, ici, un cache 15 de la ou desdites vertèbres.

Ledit balai d'essuyage comprend par ailleurs ici un connecteur 16 permettant de le raccorder au reste dudit système d'essuyage. Comme le ou lesdits embouts d'assemblage 14, ledit connecteur 16 pourra contribuer à l'assemblage de ladite raclette 13 à la ou auxdites vertèbres et/ou audit cache 15.

Cela étant, selon l'invention, ledit dispositif de connexion 1 comprend une première articulation 20 avec l'un 2 desdits bras et une deuxième articulation 30 avec l'autre 3 desdits bras, ledit dispositif de connexion 1 étant configuré pour recevoir le balai d'essuyage 4 entre la première 20 et la seconde 30 articulation, selon une direction passant par lesdites articulations 20, 30, en particulier de façon sensiblement centrée entre lesdites articulations 20, 30. On dispose de la sorte d'un dispositif de connexion léger et d'encombrement limité.

La première 20 desdites articulations est configurée pour autoriser le pivotement du premier 2 desdits bras autour d'un premier axe de pivotement 21 et/ou la seconde 30 desdites articulations est configurée pour autoriser le pivotement du second 3 desdits bras autour d'un second axe de pivotement 31. Ledit premier axe 21 et ledit second axe 31 de pivotement sont parallèles entre eux selon une direction, dite d'articulation, ici parallèle à ladite direction de pivotement autour de l'axe d'entrainement 7 dudit premier bras 2. Autrement dit, il s'agit d'une direction destinée à être orientée sensiblement orthogonalement au pare-brise. Ledit dispositif de connexion permet ainsi au balai de suivre la cinématique décrite plus haut, d'autres exemples de cinématique pouvant cependant bien sur être suivis par le système d'essuyage conforme à l'invention.

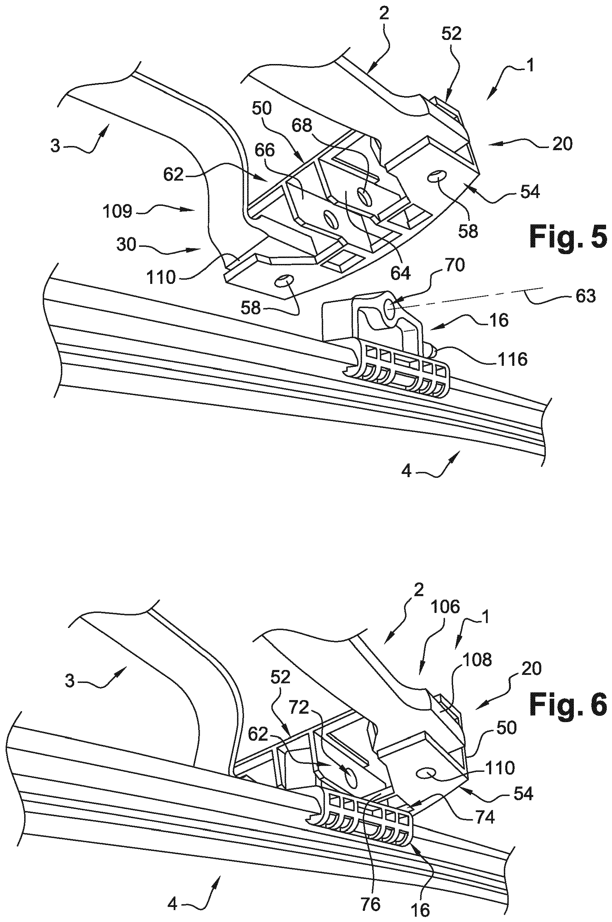

Comme plus particulièrement illustré aux figures 5 à 7, ledit dispositif de connexion 1 pourra comprendre un corps 50 dans lequel sont formées lesdites articulations 20, 30.

Ledit corps 50 comprend, par exemple, deux flasques 52, 54, ici parallèles, l'un dit supérieur et l'autre dit inférieur. L'une au moins desdites articulations 20, 30, ici les deux, est définie par deux orifices d'articulation 56, 58 respectivement formés dans chacun desdits flasques 52, 54, lesdits orifices 56, 58 étant situés en vis-à-vis selon ladite direction d'articulation 7. Autrement dit, la première articulation 20 est formée par un desdits orifices d'articulation 56 situé dans le flasque supérieur 52 et un desdits orifices d'articulation 58, situé en vis-à-vis dans le flasque inférieur 54, l'autre articulation 30 étant formés par les autres orifices d'articulation 56, 58.

Lesdits flasques 52, 54 sont destinés à être orienté orthogonalement auxdites directions de pivotement 21, 31. Ledit corps 50 comprend en outre ici une face frontale 60 (figure 4) reliant les flasques supérieur 52 et inférieur 54. Ledit corps 50 est, par exemple, ouvert du côté opposé à ladite face frontale 60 pour accueillir lesdits bras 2, 3 ainsi que sur les côtés pour laisser le débattement nécessaire à l'articulation des bras 2, 3 autour desdits axes de pivotement 21, 31.

Ledit corps 10 pourra en outre comprendre une tête d'accrochage 62 du connecteur 16 du balai 4. Ladite tête d'accrochage est située, par exemple, entre lesdits paires d'orifices d'articulation 56, 58, selon la direction passant par lesdites articulations 20, 30. Ladite tête d'accrochage est ici issue dudit flasque supérieur 52 et s'étend jusqu'audit flasque inférieur 54.

Ladite tête d'accrochage 62 pourra être configurée pour permettre une rotation du balai 4 autour d'un axe transversal 63, notamment orthogonal, à un plan suivant une direction d'extension longitudinale du balai 4 et ladite direction d'articulation 7. Autrement dit, ledit balai d'essuyage 4 est articulé en rotation autour de l'axe reliant lesdites articulations 20, 30 desdits bras 2, 3. Ladite tête d'accrochage 62 est par exemple munie pour cela de flancs 64, 66 présentant des orifices de pivotement 68, situés en vis-à-vis selon ledit axe transversal 63.

De son côté, ledit connecteur 16 comprend, par exemple, une lumière 70 de passage d'un goupille d'articulation 72, ladite tête d'accrochage 62 et ledit connecteur 16 étant configurés pour que ladite lumière 70 et lesdits orifices de pivotement 68 puissent venir en vis-à-vis pour le passage de ladite goupille d'articulation 72. Selon un autre mode de réalisation, non-illustré, des pions pourraient être prévue sur ledit connecteur 16 pour coopérer avec lesdits orifices de pivotement 68 de la tête d'accrochage 62, ou inversement.

Ledit corps 10 est, par exemple, en matériau plastique. Il comprend ici des évidements 74 au niveau desdits flasques 52, 54 et/ou de ladite face frontale 60, notamment pour alléger ledit dispositif de connexion 1. En particulier, sur ledit flasque inférieur 54, des ponts de matière 76 sont formés autour desdits évidements 74, entre lesdits flancs 64, 66 de ladite tête d'accrochage 62 et un voisinage des orifices d'articulation 58 dudit flasque inférieur 54. Sur le flasque supérieur 52 les évidements 74 présentent ici une forme en S.

Ledit corps 10 pourra présenter, comme illustré, une structure symétrique par rapport un plan destiné à passer par l'axe longitudinal du balai d'essuyage 4. Ledit dispositif de connexion pourra par ailleurs comprendre un capot, non-représenté, destiné à dissimuler tout ou partie dudit corps 10, en particulier son flasque supérieur 52. Ledit capot est assujetti, par exemple, audit flasque supérieur 52, notamment, par encliquetage.

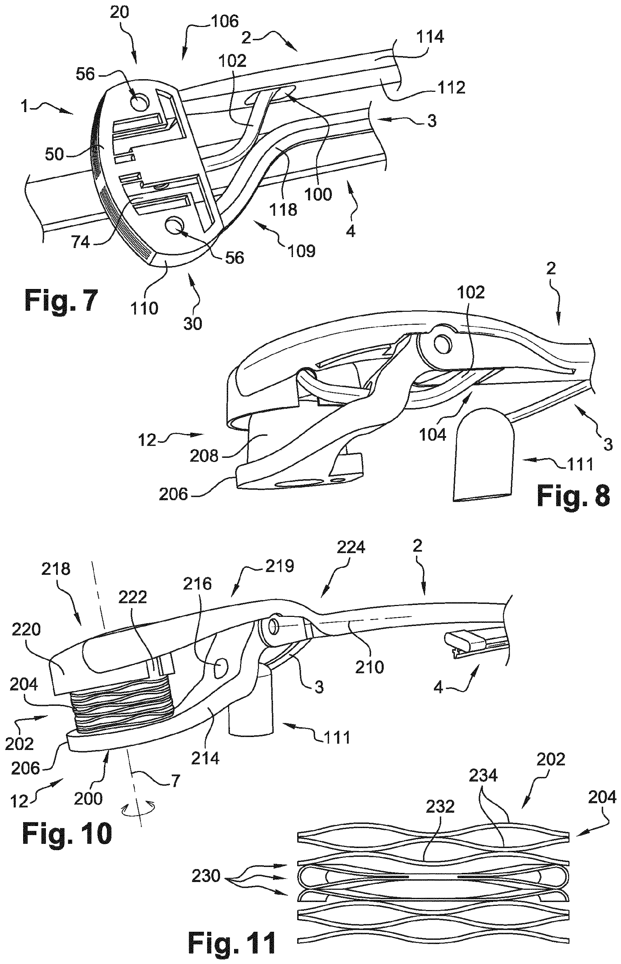

Comme cela est plus particulièrement visible à la figure 7, ledit bras d'entrainement 2 est tubulaire sur au moins une partie de sa longueur, ici sur l'ensemble. Il est en outre avantageusement muni d'un orifice latéral 100, notamment sensiblement rectangulaire, de passage d'un conduit 102 de circulation d'un liquide de lavage d'un dispositif d'aspersion dudit liquide de lavage. On dispose de la sorte d'une solution permettant d'alimenter ledit dispositif d'aspersion quand celui-ci est configuré pour projeter le liquide de lavage depuis une pièce mobile dudit système d'essuyage, en particulier ledit balai 4. On peut d'ailleurs noter qu'une telle solution trouve son intérêt y compris avec dans des systèmes d'essuyage à un seul bras d'entraînement.

Comme mieux visible à la figure 8, ledit bras d'entraînement 2 comporte une extrémité axiale 104, proximale, reliée audit dispositif d'actionnement 12. Ladite extrémité axiale proximale 104 est ici ouverte et ledit conduit 102 entre dans ledit bras d'entrainement 2 par ladite extrémité axiale proximale 104.

Ledit bras d'entraînement 2 est, par exemple, en métal. Il s'agit, notamment, d'un tube électro soudé.

Si l'on se reporte de nouveau aux figures 5 à 7, on constate que ledit bras d'entrainement 2 comporte à son extrémité axiale distale 106, opposée à ladite extrémité axiale proximale, une tête d'articulation 108 sur ledit dispositif de connexion 1. Ladite tête d'articulation 108 du bras d'entraînement 2 présente des orifices d'articulation, non-visibles, prévus dans ledit bras d'entraînement pour le passage d'une goupille 110. Pour cela, lesdits orifices d'articulation 56, 58 du corps 10 et lesdits orifices de connexion du bras d'entraînement 2 sont configurés pour se trouver en vis-à-vis de façon à définir avec ladite goupille une liaison pivot entre ledit bras d'entraînement 2 et ledit corps 10.

Ledit bras de guidage 3 pourra présenter à son extrémité longitudinale distale 109 une tête d'articulation 110 sur ledit corps 10, de structure identique à celle dudit bras d'entrainement 2. Ledit bras de guidage 3 pourra lui aussi être tubulaire. Il est ici lié par son extrémité longitudinale proximale, opposée à ladite extrémité distale 109, à une articulation en rotation 111 (figure 8), destinée à être assujettie au véhicule.

Ledit bras d'entrainement 2 comprend deux grands côtés 112, parallèles, reliés par des petits côtés 114. Ledit orifice de passage latéral 100 est situé ici sur l'un desdits grands côtés 112, en particulier à proximité de ladite extrémité distale 106. Autrement dit, ledit orifice latéral 100 est situé à proximité de ladite tête d'articulation 108 du bras d'entrainement 2.

Ledit orifice latéral 100 est prévu, par exemple, en vis-à-vis dudit bras de guidage 3, en particulier en vis-à-vis de l'extrémité distale 109 dudit bras de guidage 3. Ledit orifice latéral 100 pourra avantageusement être localisé à une distance dudit connecteur 16 du balai 4 permettant un cintrage dudit conduit 102 entre ledit orifice de passage 100 et ledit connecteur 16 sur lequel ledit conduit 102 est ici connecté par un embout 116.

Ledit bras de guidage 3 comporte ici un coude 118 par lequel ledit bras de guidage 3 s'écarte dudit bras d'entrainement 2, en direction de son articulation 30 sur ledit dispositif de connexion 1. Ledit orifice latéral 100 est situé, par exemple, en vis-à-vis dudit coude 118.

Comme plus particulièrement illustré aux figures 9 à 11, et comme déjà évoqué plus haut, le système d'essuyage conforme à l'invention pourra encore comprendre un dispositif d'actionnement 12 d'un bras d'entrainement d'un balai, en particulier dudit bras d'entrainement 2 du balai 3.

Ledit dispositif d'actionnement 12 comprend, par exemple, un moyeu d'entrainement 200 dudit bras d'entrainement 2 autour de l'axe de pivotement 7 et un moyen de rappel élastique 202, configuré pour appliquer ledit bras d'entrainement 2 en direction du pare-brise en prenant appui sur le moyeu 200, ledit moyen de rappel 202 comprenant un ressort 204 du type à fil ondulé. Un tel ressort offre l'avantage de présenter une raideur significative dans un encombrement et pour un poids limité. On constate d'ailleurs qu'une telle solution trouve son intérêt non seulement dans des systèmes d'essuyage à deux bras comme dans le système illustré mais également dans des systèmes d'essuyage à un seul bras d'entraînement.

Ledit ressort 204 est positionné sur le moyeu 200 de façon à exercer un effort, dit axial, orienté selon ledit axe de pivotement 7. Ledit moyeu comprend, par exemple, une base 206 dont est issu un plot 208 (mieux visible figure 8). Ledit ressort 204 prend appui sur ladite base 206 en étant disposé autour dudit plot 208. Ladite base 206 est destinée à être assujettie au véhicule.

Ledit moyeu 200 pourra comprendre un axe d'articulation 210 du bras d'entrainement 2, orienté transversalement audit axe de pivotement 7. Ledit axe d'articulation est ici orienté orthogonalement audit axe de pivotement 7. Ledit axe d'articulation 210 est situé, par exemple, au niveau d'un bras coudé 214 issu de ladite base 206. Ledit bras 214 de la base 206 du moyeu pourra présenter une lumière 216 pour le passage du conduit 102 de circulation du liquide lave glace.

Ledit dispositif d'actionnement 7 comprend, par exemple, une pièce 218 d'appui liée au bras d'entrainement 2. Il s'agit d'une pièce formant capot du plot 208 et du ressort 204 et se prolongeant par un coude 219 en direction dudit bras d'entrainement 2, ici pour le recouvrir, au moins partiellement, à la façon d'un cache. La partie de la pièce 218 formant capot du plot 208 et du ressort 204 pourra comprendre une jupe 220 s'étendant axialement en direction de ladite base 206 du moyeu. Ladite jupe 220 comprend, par exemple, une fente 222 de passage dudit conduit 102 de circulation du liquide lave glace.

Ladite pièce d'appui 218 et ledit ressort 204 sont avantageusement configurés pour que ladite pièce d'appui 218 fasse pivoter ledit bras d'entrainement en direction du pare-brise, autour dudit axe d'articulation 210, sous l'action dudit ressort 204. Ledit ressort 204 est pour cela disposé, par exemple, entre ledit moyeu 200 et une zone dite de prise d'effort de ladite pièce 218, correspondant ici au capot du plot 208 et du ressort 204, ledit ressort étant destiné à exercer son effort axial sur ladite zone de prise d'effort. Ladite pièce 218 comprend en outre une zone 224 de report de l'effort sur ledit bras d'entrainement 2, au-delà dudit axe d'articulation 210 du bras d'entrainement 2.

Comme plus particulièrement visible à la figure 11, ledit ressort 204 est, notamment, du type à fil plat. Il comprend, par exemple, des spires 230 munies d'ondulations 232 définissant des crêtes 234. Les crêtes 234 desdites ondulations 232 desdites spires 230 sont ici en contact avec une spire 230 voisine. Lesdites ondulations 232 pourront être jointes crête à crête d'une spire 230 à l'autre. Ledit ressort comprend, par exemple, cinq à dix spires 230 et/ou cinq à dix crêtes 232 par spire.

Ledit système d'essuyage pourra comprendre en outre un dispositif d'aspersion d'un liquide lave-glace, en particulier un dispositif d'aspersion depuis ledit balai 4.

Ledit dispositif d'aspersion pourra comprendre une rampe d'aspersion, non-illustrée, s'étendant le long du balai d'essuyage, selon la direction longitudinale d'extension de ce dernier, ladite rampe comportant une pluralité d'orifices de projection agencés pour projeter le liquide de lavage au moins perpendiculairement à la direction longitudinale dans lequel il s'étend.

Selon un exemple de réalisation, ladite rampe de projection est fabriquée distinctement de la raclette 13, et rapportée sur cette dernière. Selon un autre exemple de réalisation, ladite rampe d'aspersion pourra être formée par un conduit intégré à la raclette 13, et qui chemine le long de la direction longitudinale de cette dernière.

Ledit dispositif d'aspersion pourra être configuré pour asperger ladite vitre depuis ledit balai 4 selon une première et/ou une seconde direction d'aspersion opposée. Autrement dit, une dite rampe d'aspersion pourra être située de chaque côté dudit balai 4 pour asperger la vitre par un premier et/ou un second desdits côtés, notamment en fonction du sens ascendant ou descendant du balai 4.

Ledit circuit d'alimentation comprend en outre, par exemple, ledit conduit 102, flexible, d'alimentation en liquide lave-glace.

Ledit dispositif d'aspersion pourra être alimenté par un dispositif de transport du liquide de lavage du pare-brise, non représenté. Selon un exemple de réalisation, un tel dispositif de transport du liquide prend la forme d'un ou plusieurs tuyaux qui canalisent le liquide de lavage depuis au moins un réservoir installé, par exemple, dans un compartiment avant du véhicule jusqu'audit conduit 120, prévu débouchant, par exemple, à travers ledit plot 208 du moyeu 200, prévu creux. Le liquide de lavage est mis en circulation dans le dispositif de transport de liquide, notamment, par au moins une pompe.

Le dispositif de transport du liquide, la pompe et optionnellement le réservoir forment un ensemble d'approvisionnement en liquide de lavage.

Le système d'essuyage et de lavage pourra également comprendre un dispositif de chauffage du liquide de lavage. Ce dernier est, par exemple, incorporé au réservoir. Alternativement, il peut être placé en tout endroit du dispositif de transport du liquide, par exemple de manière à entourer une portion d'un des tuyaux formant ce dispositif de transport.

## Revendications

1. Dispositif de connexion pour système d'essuyage, notamment de pare-brise de véhicule automobile, à deux bras d'entrainement (2, 3) d'un balai d'essuyage (4) dudit système, ledit dispositif comprenant une première articulation (20) avec l'un (2) desdits bras configurée pour autoriser le pivotement d'un premier (2) desdits bras autour d'un premier axe de pivotement (21) et une deuxième articulation (30) avec l'autre (3) desdits bras configurée pour autoriser le pivotement du second (3) desdits bras autour d'un second axe de pivotement (31), ledit premier axe (21) et ledit second axe (31) de pivotement sont parallèles entre eux selon une direction (7), dite d'articulation, ledit dispositif étant configuré pour recevoir le balai d'essuyage (4) entre la première (20) et la seconde (30) articulation, selon une direction passant par lesdites articulations (20, 30), ledit dispositif comprend un corps (10) dans lequel sont formées lesdites articulations (20, 30), le dispositif étant **caractérisé en ce que** ledit corps (10) comprend deux flasques (52, 54), l'un dit supérieur et l'autre dit inférieur et l'une au moins desdites articulations (20, 30) est définie par deux orifices d'articulation (56, 58) respectivement formés dans chacun desdits flasques (52, 54), lesdits orifices (56, 58) étant situés en vis-à-vis selon ladite direction d'articulation (7).

2. Dispositif selon la revendication 1 dans lequel ledit corps (10) comprend une tête d'accrochage (62) d'un connecteur (16) du balai (4).

3. Dispositif selon la revendication 2 dans lequel chacune desdites articulations (20, 30) est formée par deux dits orifices d'articulation (56, 58) et ladite tête (62) est située entre lesdits orifices d'articulation (56, 58), selon une direction passant par lesdites articulations (20, 30).

4. Dispositif selon l'une quelconque des revendications l'une des revendications 2 ou 3 dans lequel ladite tête d'accrochage (62) est issue dudit flasque supérieur (52).

5. Dispositif selon l'une quelconque des revendications 2 à 4 dans lequel ladite tête d'accrochage (62) s'étend jusqu'audit flasque inférieur (54).

6. Dispositif selon l'une quelconque des revendications 2 à 5 dans lequel ladite tête d'accrochage (62) est configurée pour permettre une rotation du balai autour d'un axe transversale (63) à un plan suivant une direction d'extension du balai (4) et ladite direction d'articulation (7).

7. Dispositif selon l'une quelconque des revendications 2 à 6 dans lequel ladite tête d'accrochage (62) est munie de flancs (66, 68) présentant des orifices (68) de pivotement, situés en vis-à-vis et permettant la rotation du balai autour dudit axe transversale 63).

8. Système d'essuyage comprenant un dispositif de connexion (1) selon l'une quelconque des revendications précédentes.

9. Système d'essuyage selon la revendication 8 comprenant lesdits bras d'entrainement (2, 3) et dans lequel lesdits bras (2, 3) sont destinés à donner au balai d'essuyage une trajectoire comprenant une composante de pivotement autour d'un axe d'entrainement du premier (2) desdits bras, destiné à entrainer le balai, et une composante de décalage angulaire par rapport à ladite composante de pivotement par l'intermédiaire de l'autre (3) desdits bras.

10. Système selon l'une quelconque des revendications 8 ou 9 comprenant en outre ledit balai d'essuyage (4), un dispositif d'aspersion depuis ledit balai et/ou un dispositif d'actionnement (12) de l'un au moins desdits bras (2, 3).

## Patentansprüche

1. Verbindungsvorrichtung für ein Scheibenwischsystem, insbesondere eine Kraftfahrzeugwindschutzscheibe, mit zwei Antriebsarmen (2, 3) eines Wischerblatts (4) des Systems, wobei die Vorrichtung eine erste Gelenkverbindung (20) mit einem (2) der Arme aufweist, die konfiguriert ist, um das Schwenken eines ersten (2) der Arme um eine erste Schwenkachse (21) zuzulassen und eine zweite Gelenkverbindung (30) mit dem anderen (3) der Arme, die konfiguriert ist, um das Schwenken des zweiten (3) der Arme um eine zweite Schwenkachse (31) zuzulassen, umfasst, wobei die erste Schwenkachse (21) und die zweite Schwenkachse (31) parallel zueinander in einer Richtung (7), genannt Gelenkrichtung, liegen, wobei die Vorrichtung konfiguriert ist, um das Wischerblatt (4) zwischen der ersten (20) und der zweiten (30) Gelenkverbindung in einer Richtung, die durch die Gelenke (20, 30) verläuft, aufzunehmen, wobei die Vorrichtung einen Körper (10) aufweist, in dem die Gelenkverbindungen (20, 30) ausgebildet sind, wobei die Vorrichtung **dadurch gekennzeichnet ist, dass** der Körper (10) zwei Flansche (52, 54) aufweist, wobei der eine oberer und der andere unterer Flansch genannt wird, und mindestens eine der Gelenkverbindungen (20, 30) durch zwei Gelenköffnungen (56, 58) definiert ist, die jeweils in jedem der Flansche (52, 54) ausgebildet sind, wobei die Öffnungen (56, 58) einander in der Gelenkrichtung (7) gegenüberliegen.

2. Vorrichtung nach Anspruch 1, wobei der Körper (10) einen Befestigungskopf (62) eines Verbinders (16) des Blatts (4) aufweist.

3. Vorrichtung nach Anspruch 2, wobei jede der Gelenkverbindungen (20, 30) durch zwei sogenannte Gelenköffnungen (56, 58) ausgebildet ist und der Kopf (62) sich zwischen den Gelenköffnungen (56, 58) in einer Richtung, die durch die Gelenke (20, 30) verläuft, befindet.

4. Vorrichtung nach einem der Ansprüche einem der Ansprüche 2 oder 3, wobei der Befestigungskopf (62) aus dem oberen Flansch (52) hervorgeht.

5. Vorrichtung nach einem der Ansprüche 2 bis 4, wobei sich der Befestigungskopf (62) bis zum unteren Flansch (54) erstreckt.

6. Vorrichtung nach einem der Ansprüche 2 bis 5, wobei der Befestigungskopf (62) so konfiguriert ist, dass er eine Drehung des Blatts um eine Querachse (63) in einer Ebene gemäß einer Ausdehnungsrichtung des Blatts (4) und der Gelenkrichtung (7) ermöglicht.

7. Vorrichtung nach einem der Ansprüche 2 bis 6, wobei der Befestigungskopf (62) mit Seitenwänden (66, 68) versehen ist, die Schwenköffnungen (68) aufweisen, die einander gegenüberliegend angeordnet sind und die die Drehung des Blatts um die Querachse 63) ermöglichen.

8. Scheibenwischsystem, aufweisend eine Verbindungsvorrichtung (1) nach einem der vorhergehenden Ansprüche.

9. Scheibenwischsystem nach Anspruch 8, aufweisend die Antriebsarme (2, 3) und wobei die Arme (2, 3) dazu bestimmt sind, dem Wischerblatt eine Bahn zu geben, das eine Schwenkkomponente um eine Antriebsachse des ersten (2) der Arme aufweist, der dazu bestimmt ist, das Blatt anzutreiben, und eine Winkelversatzkomponente in Bezug auf die Schwenkkomponente durch den anderen (3) der Arme.

10. System nach einem der Ansprüche 8 oder 9, aufweisend ferner das Wischerblatt (4), eine Sprühvorrichtung ausgehend von dem Blatt und/oder eine Betätigungsvorrichtung (12) von mindestens einem der Arme (2, 3).

## Claims

1. Connection device for a wiping system, in particular for wiping a motor vehicle windscreen, having two driving arms (2, 3) for a wiper (4) of said system, said device comprising a first articulation (20) with one (2) of said arms configured to allow the first (2) of said arms to pivot about a first pivot axis (21) and a second articulation (30) with the other (3) of said arms configured to allow the second (3) of said arms to pivot about a second pivot axis (31), said first pivot axis (21) and said second pivot axis (31) are parallel to one another in a direction (7), known as the articulation direction, said device being configured to receive the wiper (4) between the first (20) and the second (30) articulation, in a direction passing through said articulations (20, 30), said device comprising a body (10) in which said articulations (20, 30) are formed, the device being **characterized in that** said body (10) comprises two flanges (52, 54), one being known as the upper flange and the other as the lower flange, and at least one of said articulations (20, 30) is defined by two articulation orifices (56, 58) formed respectively in each of said flanges (52, 54), said orifices (56, 58) being located opposite one another in said articulation direction (7).

2. Device according to Claim 1, in which said body (10) comprises a coupling head (62) for a connector (16) of the wiper (4).

3. Device according to Claim 2, in which each of said articulations (20, 30) is formed by two said articulation orifices (56, 58) and said head (62) is located between said articulation orifices (56, 58), in a direction passing through said articulations (20, 30).

4. Device according to either of Claims 2 and 3, in which said coupling head (62) starts from said upper flange (52).

5. Device according to any one of Claims 2 to 4, in which said coupling head (62) extends as far as said lower flange (54).

6. Device according to any one of Claims 2 to 5, in which said coupling head (62) is configured to allow the wiper to rotate about a transverse axis (63) with respect to a plane in a direction of extension of the wiper (4) and said articulation direction (7).

7. Device according to any one of Claims 2 to 6, in which said coupling head (62) is provided with side walls (66, 68) that have pivoting orifices (68) that are located opposite one another and allow the wiper to rotate about said transverse axis (63).

8. Wiping system comprising a connection device (1) according to any one of the preceding claims.

9. Wiping system according to Claim 8 comprising said driving arms (2, 3) and, in which said arms (2, 3) are intended to give the wiper a trajectory that comprises a pivoting component about a driving axis of the first (2) of said arms, intended to drive the wiper, and a component with an angular offset with respect to said pivoting component by way of the other (3) of said arms.

10. System according to either of Claims 8 and 9, furthermore comprising said wiper (4), a device for spraying from said wiper and/or a device (12) for actuating at least one of said arms (2, 3).
